# EUROPÄISCHE PATENTANMELDUNG

(11) **EP 2 604 770 A2**
(43) Veröffentlichungstag der Anmeldung: **19.06.2013**
(21) Anmeldenummer: 12008009.8
(22) Anmeldetag: 28.11.2012
(51) Int. Cl.: E04F 13/08, E04F 13/14, H01L 31/04

(54) **Anordnung zur Befestigung von Platten**

(30) Priorität: 12.12.2011 AT 18162011
(71) Anmelder: Lenz, Bernhard, 6858 Schwarzach (AT)
(72) Erfinder: Lenz, Bernhard, 6858 Schwarzach (AT)
(74) Vertreter: Fechner, Thomas

(57) **Zusammenfassung**

Anordnung zur Befestigung von Platten (1, 2), insbesondere plattenförmigen Solarmodulen, an Fassaden und/oder Dächern, wobei die Anordnung zumindest ein erstes, an einer ersten der Platten (1) befestigtes oder zu befestigendes Rahmenprofil (3) und zumindest ein weiteres, an einer weiteren der Platten (2) befestigtes oder zu befestigendes Rahmenprofil (4) und zumindest einen Tragkörper (5) aufweist, wobei die Rahmenprofile (3, 4) und der Tragkörper (5) jeweils als zunächst voneinander getrennte Bauteile ausgebildet sind und in der Anordnung dann die Rahmenprofile (3, 4) mittels des Tragkörpers (5) an einer Unterkonstruktion (6) der Fassade und/oder des Daches befestigt sind, wobei die Rahmenprofile (3, 4) in der Anordnung schindelartig bereichsweise überlappend angeordnet sind.

## Beschreibung

Die vorliegende Erfindung betrifft eine Anordnung zur Befestigung von Platten, insbesondere plattenförmigen Solarmodulen, an Fassaden und/oder Dächern, wobei die Anordnung zumindest ein erstes, an einer ersten der Platten befestigtes oder zu befestigendes Rahmenprofil und zumindest ein weiteres, an einer weiteren der Platten befestigtes oder zu befestigendes Rahmenprofil und zumindest einen Tragkörper aufweist, wobei die Rahmenprofile und der Tragkörper jeweils als zunächst voneinander getrennte Bauteile ausgebildet sind und in der Anordnung dann die Rahmenprofile mittels des Tragkörpers an einer Unterkonstruktion der Fassade und/oder des Daches befestigt sind.

In der modernen Architektur werden Fassaden und Dächer häufig mit Platten belegt bzw. gestaltet. Ein besonderes Aufgabenfeld ist dabei auch die Befestigung und Integration von Solarmodulen, sei es nun zur Warmwasser- oder zur Stromgewinnung oder für beides in Fassaden und/oder Dächer. In der AT 509506 A1 ist eine gattungsgemäße Anordnung zur Befestigung von Platten an Fassaden und/oder Dächern gezeigt. Die dort realisierten Rahmenprofile werden auf einer Seite mittels Schwenkgelenk an einem Tragkörper eingehängt, dann in ihre Montagestellung geschwenkt und mittels einer Befestigungsvorrichtung am anderen Tragkörper befestigt. Die in der AT 509506 A1 gezeigte Befestigungsvorrichtung weist eine relativ kleine Nase auf, welche mittels eines schwenkbaren Riegels verriegelt wird. Diese relativ filigran gestaltete Befestigungseinrichtung setzt relativ hohe Anforderungen an die Genauigkeit bei der Ausführung der Unterkonstruktion.

Aufgabe der vorliegenden Erfindung ist es, eine gattungsgemäße Anordnung zur Befestigung von Platten an Fassaden und/oder Dächern zu schaffen, bei der größere Toleranzen in der Genauigkeit der Ausführung der Unterkonstruktion in Kauf genommen werden können.

Dies wird erfindungsgemäß erreicht, indem die Rahmenprofile in der Anordnung schindelartig bereichsweise überlappend angeordnet sind.

In der Anordnung bedeutet dabei bevorzugt im fertig montierten Zustand der Anordnung. Durch die schindelartige Ausgestaltung der Anordnung kann diese einfach und schnell montiert werden, wobei gleichzeitig relativ große Toleranzen in der Unterkonstruktion in Kauf genommen werden können.

Bevorzugt ist vorgesehen, dass das erste Rahmenprofil in der Anordnung bereichsweise unter das weitere Rahmenprofil eingeschoben angeordnet ist. Günstig ist es, wenn das erste Rahmenprofil in der Anordnung, vorzugsweise direkt, auf einem unteren Anschlag des Tragkörpers, vorzugsweise eines Montageschenkels des Tragkörpers zur Montage des Tragkörpers an der Unterkonstruktion, aufliegt. Bevorzugte Varianten können auch vorsehen, dass ein oberer Anschlag für das erste Rahmenprofil, vorzugsweise direkt, an einer Unterseite des weiteren Rahmenprofils angeordnet oder ausgebildet ist.

Im Sinne der Unabhängigkeit von Toleranzen in der Unterkonstruktion kann vorgesehen sein, dass in der Anordnung der Abstand zwischen dem unteren Anschlag und dem Befestigungspunkt des weiteren Rahmenprofils am Tragkörper fix ist. In diesem Zusammenhang ist es auch günstig, wenn in der Anordnung der Abstand zwischen dem unteren Anschlag und dem oberen Anschlag fix ist.

Günstigerweise ist vorgesehen, dass die Anordnung zumindest für das erste Rahmenprofil einen oberen Anschlag und einen unteren Anschlag aufweist und im fertig montierten Zustand der Anordnung der Abstand der Anschläge zueinander fix und das erste Rahmenprofil zwischen den Anschlägen angeordnet ist, indem ein von der Unterkonstruktion abgewendeter oberer Endbereich des ersten Rahmenprofils, vorzugsweise mittels einer Dichtlippe des ersten Rahmenprofils, am oberen Anschlag und ein der Unterkonstruktion zugewendeter unterer Endbereich des ersten Rahmenprofils am unteren Anschlag anliegt.

Ein Grundgedanke dieser Ausgestaltungsformen der Erfindung ist es somit, dass die Anordnung zwei Anschläge aufweist, welche in einem fixen Abstand zueinander angeordnet sind, wobei man dann eines der Rahmenprofile zwischen die beiden Anschläge einschieben kann. Hierdurch erreicht man die schindelartige Ausbildung und ist relativ unabhängig von Toleranzen und sonstigen Ungenauigkeiten in der Ausführung der Unterkonstruktion. Im Gegensatz zum geschilderten Stand der Technik wird nicht mehr eine relativ filigrane Nase der Befestigungseinrichtung unter einen Riegel sondern das Rahmenprofil an sich, vorzugsweise mit seiner ganzen Dicke zwischen oberem und unterem Endbereich, zwischen die beiden Anschläge eingeschoben.

Es wird darauf hingewiesen, dass die Bezeichnungen "oben" und "unten" immer in Relation zur Unterkonstruktion zu sehen sind. Der Begriff "oben" bedeutet, dass etwas weiter von der Unterkonstruktion entfernt ist. Der Begriff "unten" bedeutet, dass etwas näher an der Unterkonstruktion angeordnet ist. Entsprechend handelt es sich beispielsweise beim oberen Anschlag um den Anschlag, der weiter von der Unterkonstruktion beabstandet ist als der untere Anschlag.

Die Tragkörper bilden die Verbindungen zwischen der Unterkonstruktion und den Rahmenprofilen. Die Tragkörper sind bevorzugt im Wesentlichen L-förmig ausgebildet. Sie weisen bevorzugt einen Montageschenkel zur Montage des Tragkörpers an der Unterkonstruktion und einen davon winkelig, vorzugsweise orthogonal, abstehenden weiteren Schenkel auf. Am Montageschenkel kann ein Formschlusselement z.B. in Form eines Anschlages angeordnet sein, welches eine eindeutige Positionierung des Tragkörpers an der Unterkonstruktion vereinfacht.

Bevorzugte Varianten sehen vor, dass der Tragkörper, vorzugsweise unter Ausbildung eines Schwenkgelenks, in eine, vorzugsweise einseitig offene, Nut des weiteren Rahmenprofils eingreift. Bei bevorzugten Ausgestaltungsformen greift der Tragkörper mit einem Gelenkkopf in die Nut des weiteren Rahmenprofils ein. Bevorzugt ist der Tragkörper als ein in sich starrer und/oder einstückiger Körper ausgebildet. Dies gilt vor allem für den unteren Anschlag bzw. den Montageschenkel und dessen Verbindung zum Befestigungspunkt für das weitere Rahmenprofil, vorzugsweise also zum Gelenkkopf.

Unabhängig davon, welche oder welche Kombination der bisher genannten Ausgestaltungsformen realisiert wird oder ob andere erfindungsgemäße Ausgestaltungsformen einer Anordnung zur Ausführung kommen, ist es jedenfalls günstig, wenn der Tragkörper in der Anordnung, also im fertig montierten Zustand der Anordnung von außen unsichtbar verdeckt ist.

Um das Einführen des ersten Rahmenprofils zwischen die Anschläge der Anordnung zu erleichtern, sehen bevorzugte Ausgestaltungsformen der Erfindung vor, dass der obere Anschlag und der untere Anschlag in einer Richtung entlang der Unterkonstruktion zueinander versetzt angeordnet sind.

Im Sinne einer kostengünstigen und modulartigen Ausgestaltung der erfindungsgemäßen Anordnung sehen bevorzugte Ausgestaltungsformen vor, dass die Rahmenprofile zueinander identisch ausgeformt sind. Sie können z.B. aus Metall wie Stahl oder Aluminium gefertigt sein. Besonders effektiv und kostengünstig können die Rahmenprofile als Strahgpressprofile hergestellt sein. Sie können verschiedene Nuten und Kanäle aufweisen, in die verschiedene Zusatzbauteile eingeführt werden können. Dies kann z.B. der oben bereits genannte Gelenkkopf des Tragkörpers sein, um das genannte Schwenkgelenk auszubilden. Es ist aber genau so gut möglich entsprechende Nuten, insbesondere Randnuten, zu verwenden, um Ablaufbleche oder Winkelbleche zur Abdichtung der Konstruktion einzuschieben. Genau so gut können Randklammern in entsprechende Randnuten eingeführt werden, z.B. um die Platte randlich zu umgreifen. Es können in den Rahmenprofilen auch Gehrungsnuten vorgesehen sein, in die Gehrungswinkel einführbar sind, um Ecken der Rahmenprofile auszubilden.

Die Rahmenprofile können nur bereichsweise an den Platten befestigt sein. Die Rahmenprofile können aber genau so gut als in sich geschlossene Rahmen ausgeführt sein, welche dann die Platte vollständig umfassen. In einem solchen Fall können die Randnuten vollständig umlaufend ausgeführt sein. Besonders bevorzugt befinden sie sich auf von der Platte abgewandten Stirnseiten des Rahmenprofils.

Das Rahmenprofil und die Platte können voneinander getrennt gefertigte Bauteile sein, die dann entsprechend miteinander verbunden werden. Das Rahmenprofil kann aber natürlich auch bereichsweise oder umlaufend gleich einstückig an der Platte mitgefertigt werden.

Grundsätzlich sind erfindungsgemäße Anordnungen für die Befestigung von verschiedensten Arten von Platten an Dächern und/oder Fassaden geeignet. Insbesondere können gattungsgemäße Anordnungen aber auch zur Befestigung und/oder Integration von Solarmodulen in Fassaden und/oder Dächer verwendet werden. Es kann sich dabei um Solarmodule zur Warmwassererzeugung aber auch um solche zur Erzeugung von elektrischem Strom handeln. Erfindungsgemäße Anordnungen können auch für Solarmodule verwendet werden, welche sowohl der Warmwassererzeugung als auch der Produktion von elektrischem Strom dienen.

Die erfindungsgemäße Anordnung kann auch dazu eingesetzt werden, verschiedene Arten von Platten und/oder Solarmodulen in eine Fassade oder in ein Dach zu integrieren.

In den Figuren sind Ausgestaltungsformen einer Anordnung dargestellt. Es zeigen:
Fig. 1 eine schematisiert dargestellte Unterkonstruktion auf der bereichsweise bereits Platten mittels erfindungsgemäßer Anordnung montiert sind;
Fig. 2 einen Schnitt entlang der Schnittlinie AA aus Fig. 1;
Fig. 3 ein Ausführungsbeispiel eines Tragkörpers;
Fig. 4 eine Montagestellung, bei der zwei benachbarte Rahmenprofile an einem einzigen Tragkörper gehalten sind;
Fig. 5 eine Variante mit einem Ablaufblech;
Fig. 6 ein als umfangsgeschlossener Rahmen ausgebildetes Rahmenprofil;
Fig. 7 ein Schnitt durch das Rahmenprofil samt Platte;
Fig. 8 einen Verbindungswinkel zwischen zwei Rahmenprofilen;
Fig. 9 eine Randklammer;
Fig. 10 ein randliches Winkelblech und
Fig. 11 eine Möglichkeit der zusätzlichen Absicherung der Konstruktion gegen Sogwirkung.

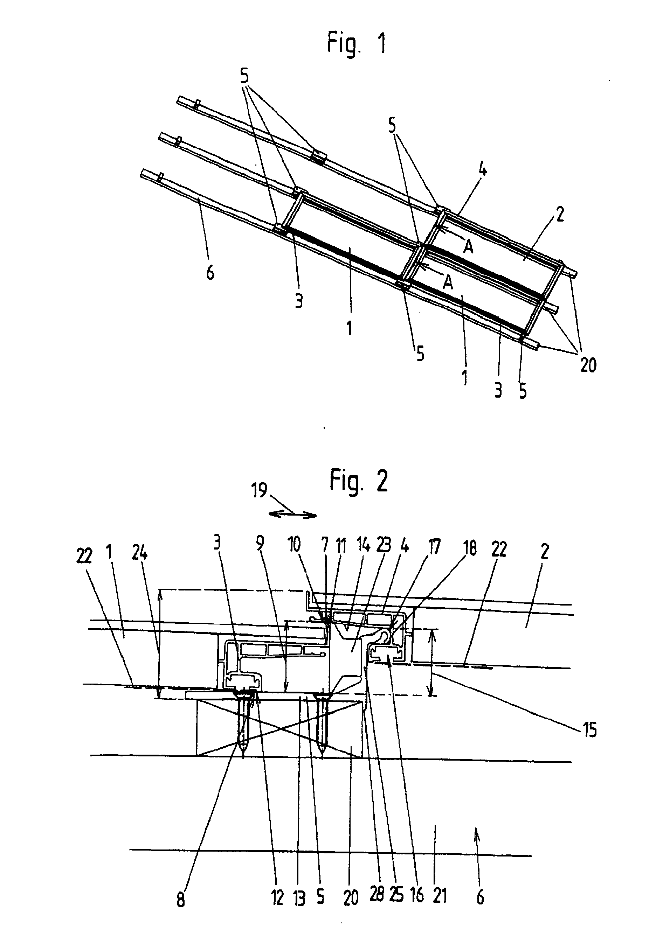

Fig. 1 zeigt eine Unterkonstruktion 6 bzw. deren parallel zueinander angeordnete Latten 20, auf der die erfindungsgemäßen Anordnungen befestigt werden sollen, um so einen mit Platten 1,2 verkleideten Fassaden- oder Dachbereich auszubilden. Die Unterkonstruktion 6 kann zusätzlich noch die, in Fig. 1 nicht dargestellten, aber in Fig. 2 sichtbaren Konterlatten 21 aufweisen, welche winkelig, vorzugsweise orthogonal, zu den Latten 20 verlaufen können. Natürlich kann es sich auch um jede beliebig andere Art einer Unterkonstruktion 6 handeln. Z.B. können dies auch vorzugsweise ebene Flächen oder dergleichen sein.

Auf dieser Unterkonstruktion 6 werden die Platten 1 und 2 mittels der Rahmenprofile 3 und 4 und der Tragkörper 5 befestigt. Die Platten 1 sind im gezeigten Ausführungsbeispiel nebeneinander in einer Reihe mittels der Rahmenprofile 3 und der Tragkörper 5 angeordnet. In der darüberliegenden Reihe befinden sich die Platten 2, welche mittels der Rahmenprofile 4 und der Tragkörper 5 ebenfalls an der Unterkonstruktion 6 befestigt sind. Im ersten Ausführungsbeispiel gemäß der Fig. 1 und 2, überlappen die Rahmenprofile 4 der oberen Reihe die Rahmenprofile 3 der unteren Reihe bereichsweise, sodass sich insgesamt eine schindelartige Konstruktion ergibt. Dies ist besonders gut im Schnitt entlang der Schnittlinie AA aus Fig. 1, welcher in Fig. 2 dargestellt ist, zu sehen. Fig. 2 zeigt somit im Detail eine erste Ausgestaltungsform der erfindungsgemäßen Anordnung. Diese weist einen oberen Anschlag 7 und einen unteren Anschlag 8 auf, welche im gezeigten, fertig montierten Zustand in einem fixen Abstand 9 zueinander angeordnet sind. Das erste der Rahmenprofile 3 ist zwischen den Anschlägen 7 und 8 angeordnet, indem ein von der Unterkonstruktion 6 abgewendeter oberer Endbereich 10 dieses ersten Rahmenprofils 3 am oberen Anschlag 7 und ein der Unterkonstruktion 6 zugewendeter unterer Endbereich 12 dieses Rahmenprofils 3 am unteren Anschlag anliegt. Das Rahmenprofil 3 ist somit mit seiner gesamten Dicke zwischen den Anschlägen 7 und 8 angeordnet. Im gezeigten Ausführungsbeispiel ist am Rahmenprofil 3 eine Dichtlippe 11 vorgesehen, mittels welcher das Rahmenprofil 3 am oberen Anschlag 7 anliegt. Die Dichtlippe 11 kann aber gegebenenfalls auch entfallen. Auch muss das erste Rahmenprofil 3 nicht zwingend an einem oberen Anschlag 7 anliegen. Im gezeigten Ausführungsbeispiel ist der obere Anschlag 7 an der Unterseite 14 des weiteren Rahmenprofils 4 angeordnet bzw. von dieser Unterseite 14 ausgebildet. Der untere Anschlag 8 ist bei dieser Variante durch den Tragkörper 5 bzw. dessen Montageschenkel 13 ausgebildet. Zwischen den Anschlägen 7 und 8 befindet sich ein fixer Abstand 9, welcher günstigerweise zwischen 5 mm und 140 mm, vorzugsweise zwischen 26 mm und 51 mm, beträgt. Ein anderer fixer Abstand 15 befindet sich vorzugsweise, wie hier auch realisiert, zwischen dem unteren Anschlag 8 für das erste Rahmenprofil 3 und dem Befestigungspunkt des weiteren Rahmenprofils 4 am Tragkörper 5. Dieser Befestigungspunkt kann, wie in diesem Ausführungsbeispiel auch realisiert, als Gelenkkopf 18 ausgeführt sein. Der fixe Abstand 15 liegt günstigerweise in einem Werteintervall zwischen 4 mm und 120 mm, vorzugsweise 25 mm und 50 mm. Die Abstände 9 und 15 werden bevorzugt in einer Richtung normal auf die Unterkonstruktion 6 gemessen, wie dies in Fig. 2 auch dargestellt ist. Zusätzlich sind die Anschläge 7 und 8 bei der in Fig. 2 gezeigten Variante auch noch in einer Richtung 19 entlang der Unterkonstruktion 6 versetzt zueinander angeordnet. Dies vereinfacht die weiter unten geschilderte Montage.

Sowohl das erste Rahmenprofil 3 als auch das weitere Rahmenprofil 4 sind mittels eines gemeinsamen Tragkörpers 5 an der auf der Konterlatte 21 aufliegenden Latte 20 befestigt. Gezeigt ist hier eine Verschraubung des Montageschenkels 13 mit der Latte 20. Dies ist natürlich nur ein Beispiel. Der Tragkörper 5 kann natürlich auch in anderer Art und Weise an der Unterkonstruktion 6 befestigt sein. Günstig ist jedenfalls das Vorsehen eines Formschlusselementes 28, welches im gezeigten Ausführungsbeispiel einen Anschlag bildet, mit dem der Tragkörper 5 einfach auf der Latte 20 bzw. Unterkonstruktion 6 ausgerichtet werden kann. Bei der gezeigten Variante weist der Tragkörper 5 einen L-förmigen Querschnitt auf, wie dies in Fig. 2 auch gut zu erkennen ist. Neben dem Montageschenkel 13 besitzt der Tragkörper 5 auch den weiteren Schenkel 25, welcher an seinem vom Montageschenkel 13 abgewandten Ende den Gelenkkopf 18 trägt.

Der Gelenkkopf 18 ist Teil des Schwenkgelenks 16, mit dem das weitere Rahmenprofil 4, welches im gezeigten Ausführungsbeispiel die Platte 2 trägt, am Tragkörper 5 und damit an der Unterkonstruktion 6 befestigt ist. Der Gelenkkopf 18 ist zur Ausbildung des Schwenkgelenks 16 in die nach außen offene Nut 17 des Rahmenprofils 4 eingeführt. Die Unterseite 14 des Rahmenprofils 4 bildet, wie gesagt, in diesem Ausführungsbeispiel den oberen Anschlag 7 für das Rahmenprofil 3.

Die Befestigung der Platten 1 und 2 an den Rahmenprofilen 3 und 4 kann durch Verkleben, Verschrauben, Verspannen, Verlöten, Verschweißen oder durch andere beim Stand der Technik bekannte Befestigungsarten realisiert werden. Im konkret gezeigten Ausführungsbeispiel wird dies nicht weiter im Detail dargestellt. Die Rahmenprofile 3 und 4 können, wie eingangs bereits erläutert, sogar einstückig mit den Platten 1 und 2 ausgebildet sein. Im Sinne einer optisch hochwertigen Ausgestaltung können auch Abdeckbleche 22 an den Rahmenprofilen 3 und 4 und den Platten 1 und 2 angeordnet sein, um die Übergänge zu verdecken.

Die Gesamthöhe 24 der erfindungsgemäßen Anordnung über der Unterkonstruktion 6 kann vergleichsweise niedrig gehalten werden. Bevorzugt werden Gesamthöhen kleiner gleich 7cm, vorzugsweise kleiner gleich 6 cm, realisiert.

In der gezeigten Variante ist zwischen dem Rahmenprofil 3, dem Tragkörper 5 und dem Rahmenprofil 4 eine zusätzliche Dichtfeder 23 angeordnet. Diese hat zwei Aufgaben. Zum einen dient sie der Abdichtung der Konstruktion. Zum anderen sorgt sie für eine Spielfreistellung, indem sie die Rahmenprofile 3 und 4 gegen den Tragkörper 5 etwas vorspannt. Die Dichtfeder 23 ist bevorzugt als elastisch deformierbarer Körper ausgeführt. Es können hier verschiedene Elastomere wie z.B. EPDM (Ethylen- Propylen- Dien- Kautschuk) zum Einsatz kommen.

Zur Montage der Anordnung gemäß Fig. 2 ist festzuhalten, dass zunächst das Rahmenprofil 4 mit der Platte 2 in der gleichen, wie der nachfolgend geschilderten Art und Weise in die in Fig. 2 dargestellte Endstellung gebracht wird. Anschließend wird die Dichtfeder 23 in der dargestellten Position angeordnet. Dann kann die am nicht dargestellten Ende etwas nach oben geschwenkte Platte 1 mit ihrem in Fig. 2 dargestellten Rahmenprofil 3 zwischen dem oberen Anschlag 7 und dem unteren Anschlag 8 so weit eingeschoben werden, bis die Dichtfeder 23 komprimiert ist. Das Einschieben sollte so weit erfolgen, dass am hier nicht dargestellten anderen Ende der Platte 1 das dort angeordnete Rahmenprofil 3 so weit nach unten geschwenkt werden kann, dass die dort, genauso wie am Rahmenprofil 4 realisierte Nut 17, in eine Position kommt, in der der Gelenkkopf 18 in diese Nut 17 eingeschoben werden kann. Bei diesem Einschieben kann sich die Dichtfeder 23 wieder ausdehnen und die Platte 1 samt seiner Rahmenprofile 3 wird etwas in Richtung 19 von der Platte 2 und dem Rahmenprofil 4 weggeschoben, bis am entgegengesetzten Ende der Gelenkkopf 18 so tief in die dortige Nut 17 eingedrungen ist, wie dies in Fig. 2 am Rahmenprofil 4 gezeigt ist. In dieser Position ist dann der fertig montierte Zustand gemäß Fig. 2 erreicht. Die Platten und Rahmenprofile der nächstfolgenden unteren Reihe können dann entsprechend montiert werden.

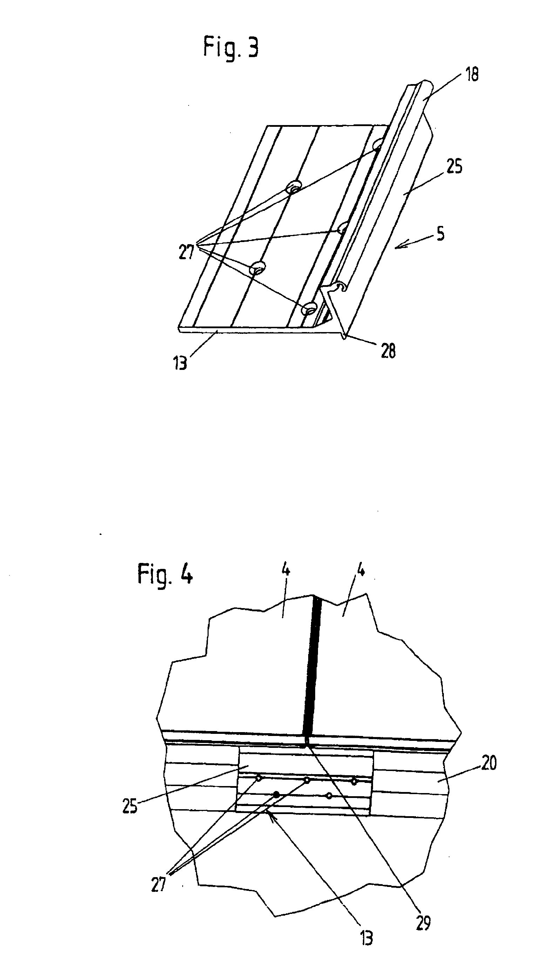

Fig. 3 zeigt eine perspektivische Darstellung des verwendeten Ausführungsbeispiels des Tragkörpers 5 mit seinem Montageschenkel 13, seinem weiteren Schenkel 25, dem Gelenkkopf 18 und Formschlusselement 28. Dargestellt sind aber auch die Befestigungslöcher 27, mittels denen der Tragkörper 5 an der Unterkonstruktion 6 festgeschraubt werden kann.

Fig. 4 zeigt beispielhaft, wie zwei in einer Reihe zueinander benachbarte Rahmenprofile 4 an einem gemeinsamen Tragkörper 5 bzw. dessen Gelenkkopf 18 befestigt sein können. Natürlich ist es auch genau so gut möglich, voneinander getrennte Tragkörper 5 für benachbarte Rahmenprofile 4 vorzusehen. Insgesamt ist darauf hinzuweisen, dass die Tragkörper 5 als Einzelbauteile oder als durchgehende Leisten ausgeführt sein können.

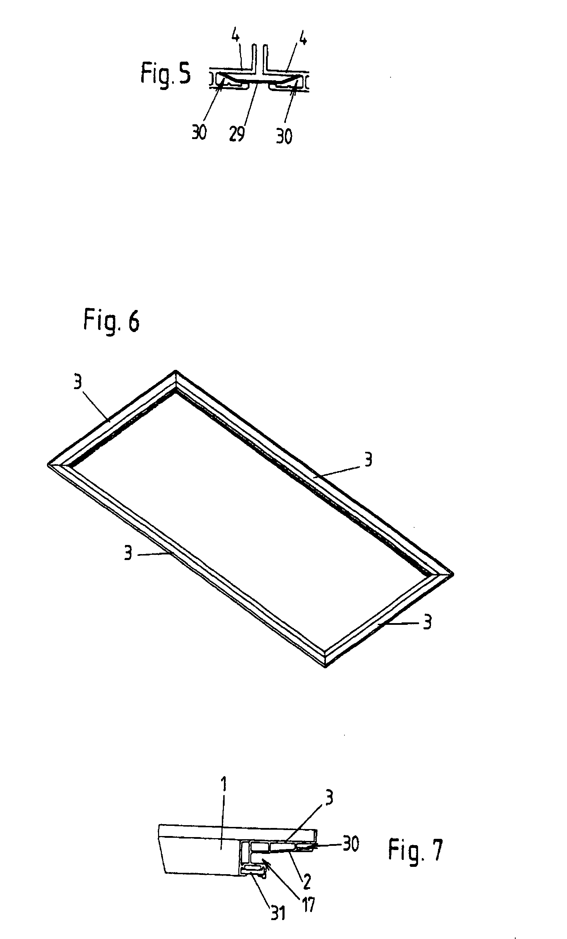

Fig. 4 zeigt jedenfalls die Situation, bei der die Rahmenprofile 3 der unteren anschließend folgenden Plattenreihe noch nicht montiert sind. Zu sehen ist in Fig. 4 auch das, die beiden benachbarten Rahmenprofile 4 verbindende Ablaufblech 29, welches für eine Abdichtung der Konstruktion sorgt. Das Ablaufblech 29 wird, wie in Fig. 5 vergrößert dargestellt, bei der gezeigten Variante in die Randnuten 13 der benachbart zueinander angeordneten Rahmenprofile 4 eingeschoben und sorgt dafür, dass Regenwasser, welches zwischen die Rahmenprofile 4 eindringt, auf dem Ablaufblech 29 abläuft und nicht weiter in die Konstruktion eindringen kann.

Fig. 6 zeigt ein als umfangsgeschlossener Rahmen ausgebildetes Rahmenprofil 3, in das die entsprechende Platte 1 eingelegt werden kann. Wie bereits eingangs erläutert, ist es günstig, wenn alle Rahmenprofile 3 und 4 identisch ausgebildet sind. Dies muss aber nicht zwingend so sein. Weiters ist darauf hinzuweisen, dass die Rahmenprofile 3 und 4 nicht zwingend als umfangsgeschlossene Rahmen ausgebildet sein müssen. Sie können auch nur bereichsweise an der Platte, vorzugsweise an deren Außenkante angeordnet sein.

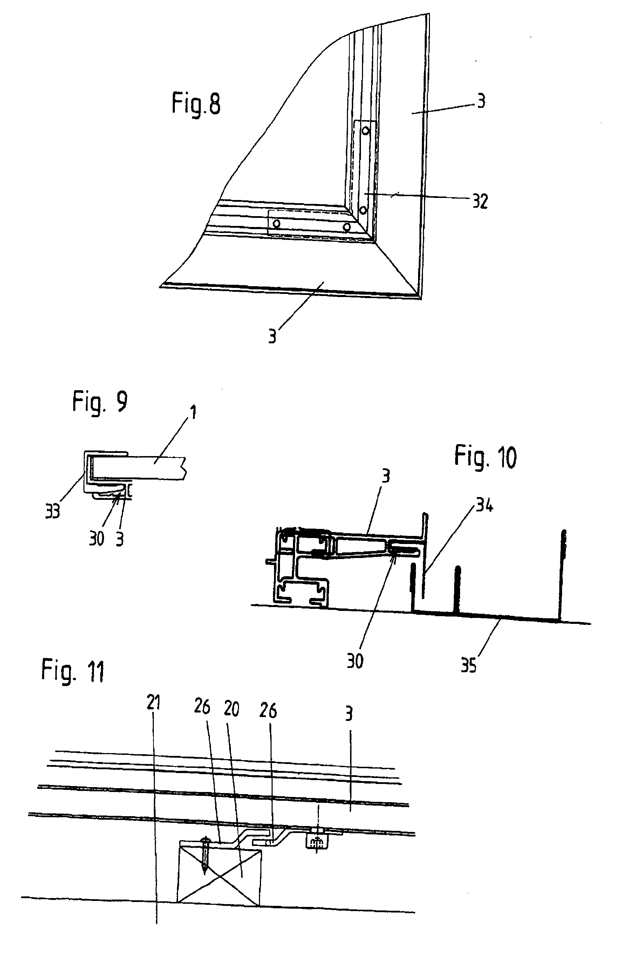

Fig. 7 zeigt nochmals einen Schnitt durch ein Rahmenprofil 3 bzw. 4, mit daran angeordneter Platte 1. Mit Bezugszeichen versehen sind hier die Randnut 30, die bereits geschilderte Nut 17 zur Einbringung des Gelenkkopfes 18 und die Gehrungsnut 31 dieses Ausführungsbeispiels. Die Gehrungsnut 31 kann dazu verwendet werden, einen Gehrungswinkel 32 in diese Nut einzuschieben, um die in Fig. 8 gezeigte Eckverbindung zweier Rahmenprofile 3 zu realisieren. Der Gehrungswinkel 32 ist im zusammengebauten Zustand eigentlich nicht zu sehen und daher in Fig. 8 gestrichelt dargestellt.

Fig. 9 zeigt beispielhaft, wie eine Randklammer 33 in die Randnut 30 eingeschoben werden kann. Die Randklammer 33 kann, z.B. wie hier gezeigt, dazu verwendet werden, um die Platte 1 formschlüssig zu umgreifen.

Fig. 10 zeigt, wie am Rand der Konstruktion in die Randnut 30 des dort vorhandenen Rahmenprofils 3 bzw. 4 ein Winkelblech 34 eingeschoben werden kann, um eine randliche Abdichtung der Konstruktion gegen Regenwasser zu erreichen. Im gezeigten Ausführungsbeispiel ragt das Winkelblech 34 mit seinem freien Schenkel hierzu in die an der Unterkonstruktion 6 zu befestigende Rinne 35, durch die Wasser ablaufen kann.

Bei der Verwendung von relativ großen Platten 1 bzw. 2 kann es auf Dächern und/oder an Fassaden durch Wind zu einer erheblichen Sogwirkung kommen. Fig. 11 zeigt eine Variante, wie die Rahmenprofile 3 bzw. 4 in einem Zwischenbereich zwischen zwei Tragkörpern 5 zusätzlich gegen Beschädigung durch Sog geschützt werden können. Bei der gezeigten Variante sind zwei Verbindungshaken 26 ineinandergreifend angeordnet, wobei einer der Verbindungshaken 26 an der Unterkonstruktion 6 bzw. der Latte 20 und der andere der Verbindungshaken 26 an dem Rahmenprofil 3 befestigt ist. Die gewählte Konstruktion erlaubt die bezüglich der Fig. 2 und 3 genannte Art und Weise der Montage der Rahmenprofile und der Platten an der Unterkonstruktion. Durch diese zusätzliche Absicherung zwischen zwei Tragkörpern 5 ist es möglich, dünnere Platten und insbesondere dünnere Glasplatten zu verwenden.

### Legende

### zu den Hinweisziffern:

- 1: Platte
- 2: Platte
- 3: Rahmenprofil
- 4: Rahmenprofil
- 5: Tragkörper
- 6: Unterkonstruktion
- 7: oberer Anschlag
- 8: unterer Anschlag
- 9: Abstand
- 10: oberer Endbereich
- 11: Dichtlippe
- 12: unterer Endbereich
- 13: Montageschenkel
- 14: Unterseite
- 15: Abstand
- 16: Schwenkgelenk
- 17: Nut
- 18: Gelenkkopf

- 19: Richtung
- 20: Latte
- 21: Konterlatte
- 22: Abdeckblech
- 23: Dichtfeder
- 24: Gesamthöhe
- 25: weiterer Schenkel
- 26: Verbindungshaken
- 27: Befestigungsloch
- 28: Formschlusselement
- 29: Ablaufblech
- 30: Randnut
- 31: Gehrungsnut
- 32: Gehrungswinkel
- 33: Randklammer
- 34: Winkelblech
- 35: Rinne

## Patentansprüche

1. Anordnung zur Befestigung von Platten (1, 2), insbesondere plattenförmigen Solarmodulen, an Fassaden und/oder Dächern, wobei die Anordnung zumindest ein erstes, an einer ersten der Platten (1) befestigtes oder zu befestigendes Rahmenprofil (3) und zumindest ein weiteres, an einer weiteren der Platten (2) befestigtes oder zu befestigendes Rahmenprofil (4) und zumindest einen Tragkörper (5) aufweist, wobei die Rahmenprofile (3, 4) und der Tragkörper (5) jeweils als zunächst voneinander getrennte Bauteile ausgebildet sind und in der Anordnung dann die Rahmenprofile (3, 4) mittels des Tragkörpers (5) an einer Unterkonstruktion (6) der Fassade und/oder des Daches befestigt sind, **dadurch gekennzeichnet, dass** die Rahmenprofile (3, 4) in der Anordnung schindelartig bereichsweise überlappend angeordnet sind.

2. Anordnung nach Anspruch 1, **dadurch gekennzeichnet, dass** das erste Rahmenprofil (3) in der Anordnung bereichsweise unter das weitere Rahmenprofil (4) eingeschoben angeordnet ist.

3. Anordnung nach Anspruch 1 oder 2, **dadurch gekennzeichnet, dass** das erste Rahmenprofil (3) in der Anordnung, vorzugsweise direkt, auf einem unteren Anschlag (8) des Tragkörpers (5), vorzugsweise eines Montageschenkels (13) des Tragkörpers (5) zur Montage des Tragkörpers (5) an der Unterkonstruktion (6), aufliegt.

4. Anordnung nach einem der Ansprüche 1 bis 3, **dadurch gekennzeichnet, dass** ein oberer Anschlag (7) für das erste Rahmenprofil (3), vorzugsweise direkt, an einer Unterseite (14) des weiteren Rahmenprofils (4) angeordnet oder ausgebildet ist.

5. Anordnung nach einem der Ansprüche 3 oder 4, **dadurch gekennzeichnet, dass** in der Anordnung der Abstand (15) zwischen dem unteren Anschlag (8) und dem Befestigungspunkt des weiteren Rahmenprofils (4) am Tragkörper (5) fix ist und/oder in der Anordnung der Abstand (9) zwischen dem unteren Anschlag (8) und dem oberen Anschlag (7) fix ist.

6. Anordnung nach einem der Ansprüche 1 bis 5, **dadurch gekennzeichnet, dass** der Tragkörper (5) in der Anordnung von außen unsichtbar verdeckt ist.

7. Anordnung nach einem der Ansprüche 1 bis 6, **dadurch gekennzeichnet, dass** der Tragkörper (5), vorzugsweise unter Ausbildung eines Schwenkgelenks (16), in eine, vorzugsweise einseitig offene, Nut (17) des weiteren Rahmenprofils (4) eingreift.

8. Anordnung nach Anspruch 7, **dadurch gekennzeichnet, dass** der Tragkörper (5) mit einem Gelenkkopf (18) in die Nut (17) des weiteren Rahmenprofils (4) eingreift.

9. Anordnung nach einem der Ansprüche 1 bis 8, **dadurch gekennzeichnet, dass** der Tragkörper (5) als, vorzugsweise in sich starrer, einstückiger Körper ausgebildet ist.

10. Anordnung nach einem der Ansprüche 4 bis 8, **dadurch gekennzeichnet, dass** der obere Anschlag (7) und der untere Anschlag (8) in einer Richtung (19) entlang der Unterkonstruktion (6) zueinander versetzt angeordnet sind.

11. Anordnung nach einem der Ansprüche 1 bis 10, **dadurch gekennzeichnet, dass** die Anordnung zumindest für das erste Rahmenprofil (3) einen oberen Anschlag (7) und einen unteren Anschlag (8) aufweist und im fertig montierten Zustand der Anordnung der Abstand (9) der Anschläge (7,8) zueinander fix und das erste Rahmenprofil (3) zwischen den Anschlägen (7, 8) angeordnet ist, indem ein von der Unterkonstruktion (6) abgewendeter oberer Endbereich (10) des ersten Rahmenprofils (3), vorzugsweise mittels einer Dichtlippe (11) des ersten Rahmenprofils (3), am oberen Anschlag (7) und ein der Unterkonstruktion (6) zugewendeter unterer Endbereich (12) des ersten Rahmenprofils (3) am unteren Anschlag (8) anliegt.

12. Anordnung nach einem der Ansprüche 1 bis 11, **dadurch gekennzeichnet, dass** die Rahmenprofile (3, 4) zueinander identisch ausgeformt sind.
